Europäisches Patentamt

European Patent Office

Office européen des brevets

(19)

(11) EP 0 784 908 B1

(12) FASCICULE DE BREVET EUROPEEN

(45) Date de publication et mention
de la délivrance du brevet:
**31.05.2000 Bulletin 2000/22**

(51) Int Cl.⁷: **H04Q 7/22**

(21) Numéro de dépôt: **95934173.6**

(22) Date de dépôt: **05.10.1995**

(86) Numéro de dépôt international:
**PCT/FR95/01297**

(87) Numéro de publication internationale:
**WO 96/11553 (18.04.1996 Gazette 1996/17)**

(54) **PROCEDE DE TARIFICATION DES COMMUNICATIONS TELEPHONIQUES DANS UN RESEAU DE COMMUNICATION MOBILE**

TELEFONGEBÜHRENERFASSUNGSVERFAHREN IN EINEM MOBILEN ÜBERTRAGUNGSNETZWERK

METHOD OF PRICING TELEPHONE COMMUNICATIONS IN A MOBILE COMMUNICATIONS NETWORK

(84) Etats contractants désignés:
**DE ES FR GB IT**

(30) Priorité: **06.10.1994 FR 9411947**

(43) Date de publication de la demande:
**23.07.1997 Bulletin 1997/30**

(73) Titulaire: **FRANCE TELECOM
75015 Paris (FR)**

(72) Inventeurs:
• **DESPRES, François
F-91570 Bièvres (FR)**
• **BLONDEAU, Olivier
F-78120 Rambouillet (FR)**
• **CHARBONNIER, Alain
F-78000 Versailles (FR)**

(74) Mandataire: **Dubois-Chabert, Guy et al
Société de Protection des Inventions
3, rue du Docteur Lanceraux
75008 Paris (FR)**

(56) Documents cités:
EP-A- 0 568 824          EP-A- 0 597 638
EP-A- 0 616 457          WO-A-93/06685
WO-A-94/05126

**Description**

Domaine technique

La présente invention concerne un procédé de communication dans un réseau de télécommunications.
Le domaine technique de l'invention est celui des systèmes de communication avec les mobiles ou avec les personnes (GSM (marque déposée), DECT (norme ETSI), Pointel (marque déposée), DCS 1800 (système identique au système GSM, avec une fréquence de 1800 MHz) , etc....). Le domaine de l'invention est également celui des réseaux des publiphones à carte à mémoire.

Etat de la technique antérieure

L'invention concerne plus particulièrement l'attribution de conditions d'accès spécifiques (tarification, numéros gratuits, services spéciaux, restriction de zone d'appel, etc...) pour des réseaux de publiphones ou de radiocommunications avec les mobiles (GSM, Pointel, DECT, DCS 1800, etc...).
Dans un réseau R2000, les tarifs en vigueur sont fonction du relais et de l'horaire :

- un tarif "rouge" est applicable aux communications établies sur les relais de la région de Paris et dans le cadre de l'abonnement "National", "France Nord-Est" et "Ile de France" ;
- un tarif "vert" est applicable pour les autres communications.

Dans le réseau Itinéris, les tarifs en vigueur sont fonction de l'horaire et du département ou l'appel est émis :

- un premier tarif est applicable pour les appels émis à partir des départements 75, 92, 93 et 94 de 8h à 21h30 du lundi au vendredi ;
- un second tarif est applicable pour les appels émis de la métropole hors les départements 75, 92, 93 et 94 de 8h à 21h30 du lundi au vendredi ;
- un troisième tarif est capable pour les appels émis de métropole de 21h30 à 8h du lundi au vendredi ;
- un quatrième tarif est applicable pour les appels émis les samedis, dimanches et jours fériés.

La tarification appliquée dans le réseau SFR repose sur les même principes.
Les principes de tarifications mis en oeuvre dans les réseaux aujourd'hui sont fonction de la zone d'appel et de la plage horaire. En aucun cas ils ne font appel à une zone choisie par l'abonné.
Les solutions mises en oeuvre dans le réseau Radiocom 2000 (marque déposée) et GSM ne permettent pas d'attribuer des conditions d'accès spécifiques à un abonné. De plus il n'est pas possible d'appliquer des conditions particulières pour des communications passées dans une zone donnée (centres commerciaux, centres d'affaires, etc...) et de faire connaître ses avantages à l'abonné.
La demande de brevet EP-A-0 597 638 décrit un système de téléphone cellulaire comprenant des mobiles qui peuvent se déplacer à l'intérieur de cellules et entre celles-ci. Chaque cellule comporte une station de base. Le tarif de taxation applicable à chaque mobile dépend de la zone dans laquelle il est situé. Dans un premier exemple, chaque mobile peut fonctionner à faible tarif lorsqu'il est situé dans sa propre zone ou zone locale et à plus fort tarif partout ailleurs, la zone locale pouvant être formée d'une ou plusieurs cellules. Dans un second exemple, un utilisateur paye un faible tarif lorsqu'il est situé dans sa propre zone locale et dans certaines autres zones spécifiées et un tarif élevé ailleurs. Chaque station de base émet un signal d'identification sur son propre canal. Ce signal est reconnu par les mobiles situés dans la cellule de cette station de base et ils répondent alors en signalant en retour leur identité à la station de base. La position de chaque mobile (c'est-à-dire la cellule dans laquelle il est situé) est ainsi connue et cette information est envoyée par la station de base correspondante à une unité de contrôle centrale. Chaque mobile dans la cellule correspondante, en répondant, affiche à l'utilisateur une identification de la cellule ou de la zone correspondante, de sorte que l'utilisateur est conscient du tarif applicable. Une identification du tarif peut également être affichée. La zone correspondant à chaque cellule correspond approximativement à une zone géographique déterminée.
Le système de téléphone cellulaire utilise donc une base de données centralisée pour déterminer les taxations qui vont être appliquées.
L'invention a pour objet d'offrir à des abonnés, en possession d'un terminal mobile ou d'une télécarte, des conditions spécifiques d'accès à un réseau de télécommunications en fonction de la zone où ils émettent ou reçoivent des appels, en résolvant les problèmes des dispositifs de l'art antérieur.

Exposé de l'invention

La présente invention propose un procédé de communication dans un réseau de télécommunications entre une borne et au moins un terminal distant de celle-ci, dans lequel on permet à un abonné à ce réseau équipé d'un terminal, ou d'un module d'identification lorsque ce terminal est un terminal multi-usagers, de choisir au moins une zone d'accès au réseau, dans laquelle il bénéficie de conditions particulières, caractérisé en ce que ledit procédé comprend les étapes suivantes :

- lors de la constitution du réseau téléchargement des coordonnées des bornes par un organe centralisé ;
- depuis la zone d'accès au réseau choisie par l'abonné, téléchargement dans le terminal, ou le module d'identification, des coordonnées cartographiques permettant d'associer à l'abonné cette zone d'accès au réseau où il bénéficiera de conditions particulières ;
- lors d'un accès au réseau, détermination par la borne correspondante si les conditions particulières s'appliquent à cet accès, en comparant ses propres coordonnée cartographiques à celles stockées et transmises par le terminal.

Le procédé de l'invention présente notamment deux caractéristiques avantageuses par rapport à la demande de brevet EP-A-0 597 638 citée plus haut :

- l'équipement qui détermine la taxation qui va être appliquée peut être décentralisé au plus près de l'abonné, ce qui implique des gains en coût et en temps ;
- il y a téléchargement par voie radio, dans les terminaux, des éléments d'information (données cartographiques) qui serviront comme conditions d'application (par exemple tarification).

Dans un premier mode de réalisation le réseau de télécommunications est un réseau accessible par voie radioélectrique, comportant des bornes d'accès, une borne étant associée avec un terminal au moment d'une communication.

Avantageusement les différentes zones d'accès sont répertoriées sur une cartographie simplifiée, en attribuant à chaque borne d'accès ou à chaque terminal multi-usagers des coordonnées élémentaires, et/ou des caractéristiques personnalisées.

Avantageusement chaque borne d'accès permet de discriminer localement (sans utilisation de ressources d'équipements plus centralisés du réseau), par abonné à ce réseau et sur la base d'informations caractéristiques, les appels locaux (par rapport à une zone géographique nominale associée à cet abonné lors de la souscription de l'abonnement ou lors d'une opération spécifique consécutive à cette souscription) émis ou reçus par cet abonné des appels non locaux afin d'appliquer des conditions d'accès ou de tarification différenciées.

Avantageusement chaque borne d'accès discrimine, par abonné à ce réseau et sur la base de données cartographiques, les appels locaux (par rapport à une zone géographique nominale associée à cet abonné lors de la souscription de l'abonnement ou lors d'une opération spécifique consécutive à cette souscription) émis ou reçus par cet abonné des appels non locaux afin d'appliquer des conditions d'accès ou de tarification différenciées.

Dans un second mode de réalisation le réseau de télécommunications est un réseau de terminaux multi-usagers comportant chacun un accès physique à un module d'identification d'abonné au réseau.

Avantageusement chaque terminal multi-usagers discrimine localement (sans utilisation de ressources d'équipements plus centralisés du réseau), par abonné à ce réseau et sur la base d'informations caractéristiques, les appels locaux (par rapport à une zone géographique nominale associée à cet abonné lors de la souscription de l'abonnement ou lors d'une opération spécifique consécutive à cette souscription) émis ou reçus par cet abonné des appels non locaux afin d'appliquer des conditions d'accès ou de tarification différenciées.

Avantageusement chaque terminal multi-usagers discrimine, par abonné à ce réseau et sur la base de données cartographiques, les appels locaux (par rapport à une zone géographique nominale associée à cet abonné lors de la souscription de l'abonnement ou lors d'une opération spécifique consécutive à cette souscription) émis ou reçus par cet abonné des appels non locaux afin d'appliquer des conditions d'accès ou de tarification différenciées.

Avantageusement les terminaux considérés dans le premier mode de réalisation peuvent être des terminaux mobiles. Dans le second mode de réalisation les modules d'identification peuvent être des cartes à mémoire.

Ainsi l'invention permet, à la fois :

- à l'abonné de choisir une (ou plusieurs) zone(s) d'appel dans laquelle (lesquelles) il a droit à des conditions particulières (tarification, numéros spéciaux, service spéciaux, etc...) ;
- à l'exploitant d'augmenter sa clientèle mobile et d'accroître le trafic;
- à un commerçant d'offrir un service particulier (tarification, numéros spéciaux, etc...) dans son magasin, ce réseau découlant d'un accord commercial entre le commerçant et l'opérateur du réseau.

De plus l'utilisation de données cartographiques permet de s'affranchir des problèmes de mise à jour de bases de données dans le réseau lorsque des bornes sont ajoutées ou supprimées.

Brève description des dessins

- La figure 1 illustre une répartition de différentes fonctions dans un réseau ;
- la figure 2 illustre un service télépoint de voisinage.

Exposé détaillé de modes de réalisation

L'invention, dont le domaine technique est celui des systèmes de communication avec les mobiles ou avec les personnes (GSM, DECT, Pointel, DCS 1800 ...), permet à un abonné équipé d'un terminal, par exemple d'un poste mobile, ou d'une carte de terminal multi-usagers, par exemple de publiphone, de bénéficier de conditions spécifiques (tarification, restriction de zone d'appel, ..., numéros ou services gratuits, ...) selon la zone d'accès au réseau.

Une ou plusieurs zones dites de voisinage ou de "quartier" proches du domicile ou du lieu de travail de l'abonné sont choisies par ce dernier et d'autres zones dites "commerciales" peuvent être affectées de caractéristiques particulières par une personne (physique ou morale) dans un but promotionnel.

Ces zones sont répertoriées sur une cartographie simplifiée, en attribuant à chaque borne d'accès ou à chaque terminal multi-usagers des coordonnées élémentaires, et parfois des caractéristiques personnalisées.

L'abonné est ainsi incité à utiliser son téléphone mobile ou sa télécarte soit dans des zones qu'il a lui-même choisies, soit dans un environnement commercial ou promotionnel attractif.

L'objet de l'invention est donc de permettre à l'abonné de faire des économies sur ses communications, au commerçant d'attirer plus de clientèle et à l'exploitant d'augmenter son trafic "mobile".

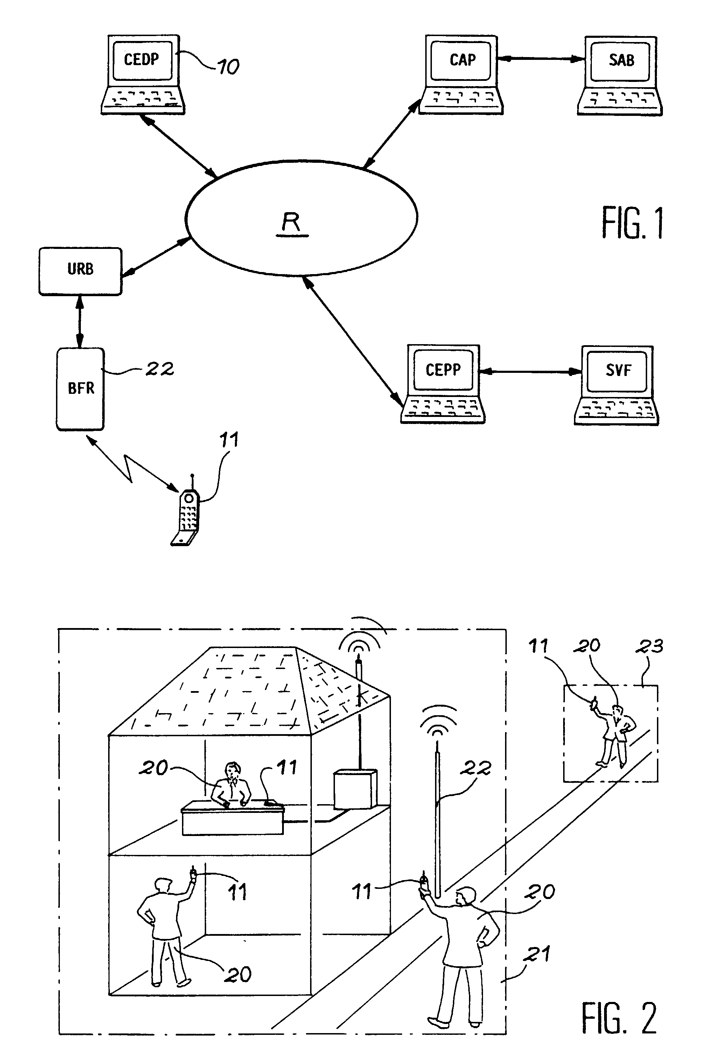

Comme représenté sur les figures 1 et 2, l'invention concerne donc un procédé de communication dans un réseau de télécommunications entre un organe de traitement et au moins un terminal 11 distant de celui-ci. L'abonné 20 équipé d'un tel terminal 11, qui peut être mobile, ou d'un module d'identification, par exemple d'une carte à mémoire, d'accès à un terminal multi-usagers, par exemple de type publiphone, peut choisir au moins une zone d'accès 21 au réseau R dans laquelle il bénéficie de conditions particulières.

Dans un premier mode de réalisation le réseau de télécommunications est un réseau accessible par voie radioélectrique, comportant des bornes d'accès, une borne étant associée avec un terminal au moment d'une communication.

Avantageusement les différentes zones 23 sont répertoriées sur une cartographie simplifiée, dans laquelle on attribue à chaque borne 22 ou à chaque terminal multi-usagers des coordonnées élémentaires et parfois des coordonnées personnalisées.

L'organe de traitement peut alors être un organe distinct 10 ou l'une des bornes d'accès ou l'un des terminaux multi-usagers.

Chaque borne d'accès peut discriminer localement (sans utilisation de ressources d'équipements plus centralisés du réseau), par abonné à ce réseau et sur la base d'informations caractéristiques, les appels locaux (par rapport à une zone géographique nominale associée à cet abonné lors de la souscription de l'abonnement ou lors d'une opération spécifique consécutive à cette souscription) émis ou reçus par cet abonné des appels non locaux afin d'appliquer des conditions d'accès ou de tarification différenciées.

Chaque borne d'appel peut également discriminer, par abonné à ce réseau et sur la base de données cartographiques, les appels locaux (par rapport à une zone géographique nominale associée à cet abonné lors de la souscription de l'abonnement ou lors d'une opération spécifique consécutive à cette souscription) émis ou reçus par cet abonné des appels non locaux afin d'appliquer des conditions d'accès ou de tarification différenciées.

Dans un second mode de réalisation le réseau de télécommunications est un réseau de terminaux multi-usagers comportant chacun un accès physique à un module d'identification d'abonné au réseau.

Chaque terminal multi-usagers peut discriminer localement (sans utilisation de ressources d'équipements plus centralisés du réseau), par abonné à ce réseau et sur la base d'informations caractéristiques, les appels locaux (par rapport à une zone géographique nominale associée à cet abonné lors de la souscription de l'abonnement ou lors d'une opération spécifique consécutive à cette souscription) émis ou reçus par cet abonné des appels non locaux afin d'appliquer des conditions d'accès ou de tarification différenciées.

Chaque terminal multi-usagers peut également discriminer, par abonné à ce réseau et sur la base de données cartographiques, les appels locaux (par rapport à une zone géographique nominale associée à cet abonné lors de la souscription de l'abonnement ou lors d'une opération spécifique consécutive à cette souscription) émis ou reçus par cet abonné des appels non locaux afin d'appliquer des conditions d'accès ou de tarification différenciées.

La figure 1 illustre la répartition des fonctions dans un réseau R.

Ainsi sont respectivement câblés au réseau R, ici le réseau Transpac:

- un centre d'exploitation décentralisé Pointel CEDP, permettant la saisie des coordonnées de bornes fixes radio 22 (BFR), illustré sur la figure 2, permettant d'obtenir une cartographie BFR, et la diffusion de ces coordonnées ;
- un centre d'authentification Pointel (CAP), qui permet une vérification des droits de téléchargement des coordonnées, auquel est relié un service des abonnées (SAB) qui gère la création d'abonnement ;
- un centre d'exploitation principal Pointel (CEPP), permettant la collecte des tickets de communication, auquel est relié un service de valorisation et de facturation (SVF) qui permet les traitements et la facturation ;
- au moins une unité de raccordement de bornes (URB) qui permet l'indication du tarif dans les tickets de communication, à laquelle est reliée une borne fixe radio 22 (BFR) permettant le calcul de la distance, l'indication à l'unité URB le tarif et l'affichage du tarif sur le centre CEPP.

On va à présent décrire deux exemples de réalisation de systèmes permettant de mettre en oeuvre le procédé de l'invention.

Premier exemple de réalisation

Le premier exemple est un exemple permettant d'attribuer à un abonné au réseau "BiBop" (marque déposée) une tarification particulière en fonction d'une zone choisie par l'abonné.

**Définition du service**

L'objectif de ce service est de fournir un accès au réseau BiBop moins cher au voisinage du domicile de l'abonné (le tarif de quartier serait opposé au tarif national actuel).

Un découpage de proximité en cellules de petites taille, le service de "télépoint de voisinage", est offert aux abonnés uniquement sur les bornes couvrant leur domicile et la proximité immédiate (immeuble, rue voisine). Ce voisinage est défini par une notion de "distance" au domicile.

La mise en place d'un tel service exige un dispositif permettant à l'abonné de choisir la zone dans laquelle il souhaite bénéficier d'une tarification réduite. Cette zone peut être définie par un ou plusieurs appels d'essais passés par l'abonné dans la zone de proximité choisie.

La zone choisie par l'abonné sert pour acheminer les appels entrants lorsque l'abonné ne s'est pas localisé explicitement (principe de localisation habituelle).

**Contraintes de réalisation**

La mise en oeuvre et sa gestion tant au niveau de l'exploitation que du système usager doivent être relativement simples.

L'abonné doit être averti, lorsqu'il décroche, du tarif (Quartier ou National) par un message vocal et (ou) un affichage écran, afin, le cas échéant (limite de zone de voisinage), de pouvoir raccrocher avant d'être taxé. Ce service doit être disponible même lorsque le centre d'authentification CAP, représenté sur la figure 1, n'est pas joignable.

**La réalisation**

La réalisation proposée repose sur une cartographie simplifiée, attribuant à chaque borne 22 (BFR) des coordonnées élémentaires permettant un calcul facile dans le réseau de la distance entre la borne nominale de l'abonné et la borne sous laquelle il effectue l'appel en cours. La précision nécessaire à cet outil cartographique peut être, par exemple, de l'ordre de la dizaine de mètres.

L'exploitant, au moment de la création d'une borne, saisit au niveau du centre d'exploitation décentralisé Pointel CEDP, représenté sur la figure 1, en plus des caractéristiques habituelles, les coordonnées dans un système cartographique (Lambert par exemple). Ces coordonnées sont ajoutées aux données de fonctionnement des bornes transmises successivement du centre CEDP aux unités de raccordement de bornes URB, puis des unités URB à leurs bornes respectives de rattachement. L'unité URB envoie à chacune de ses bornes ses coordonnées cartésiennes.

Un (ou plusieurs) appels doivent définir la zone choisie par l'abonné. Lorsque la zone (une borne) a été choisie, le centre d'authentification CAP provoque, sur réception d'un numéro particulier tapé par l'abonné, un téléchargement des coordonnées de la borne dans le combiné (Cf. Norme CT2 I-ETS 300 131). Ces coordonnées sont stockées dans le message TRD (transmission de données) .

Les coordonnées de la borne peuvent être stockées dans la partie du message TRD inutilisé.

La structure du message TRD actuel est la suivante : chaque lettre représentant 4 bits :

AB CD EF GH :        Identification d'abonné

I :        version d'abonnement

        0 : abonnement à gestion publique
        1 ou 2 : abonnement à gestion privée

J :        priorité

        0 : abonnement non sélection
        1 : abonnement sélection

KL MN OP QR ST :    fonction de la version (I)

Pour I = 0

K=1 :        appels entrant acceptés

L = 1 :        facturation rapide

M = 1 :    observation

Une première solution consiste à utiliser les digits N à T en gardant la structure du message TRD. Une alternative est de définir une nouvelle version d'abonnement I = 3 et d'utiliser les valeurs L à T pour la localisation des bornes.
Pour les abonnés ayant souscrit au service "télépoint de voisinage" (un indicateur dans le message TRD est positionné), la borne BFR, à chaque appel, calcule la distance entre les coordonnées contenues dans le message TRD et les coordonnées de la borne sous laquelle la communication s'est établie.
La distance au-delà de laquelle le tarif Quartier n'est pas accordé peut être contenue dans une temporisation BFR (en mètres). Si la distance est inférieure à ce seuil, la borne envoie un message affichage sur le combiné indiquant à l'abonné s'il se situe ou non dans sa zone de voisinage, afin de permettre, le cas échéant, le raccrochage de l'abonné avant toute taxation. Un message vocal peut également être envoyé.
Lorsque la communication se termine, la borne envoie un raccroché borne BFR en indiquant le tarif utilisé (un nouveau champ). L'unité URB élabore le ticket de communication en positionnant un nouveau drapeau dans le champ "indicateur du ticket de communication" permettant au service de facturation de différencier les deux types de tarifs.
Les coordonnées Lambert 2 sont utilisées par l'IGN (Institut Géographique National) lors de la numérisation de fond de cartes de diverses régions de France. Ces coordonnées ont pour unité le mètre. Une précision de l'ordre de la dizaine de mètre semble suffisante pour l'application "télépoint de voisinage". De plus, plutôt que de couvrir l'ensemble du territoire français par un seul jeu de coordonnées, il est préférable de le partager en plusieurs zones. A chacune de ces zones, un nouveau repère est attribué. Ceci permet de travailler dans des repères relatifs avec des valeurs de coordonnées moins importantes. Le combiné doit donc connaître les coordonnées de la borne nominale de l'abonné ainsi que le numéro de la zone à laquelle cette dernière appartient.
Soit q le nombre de bits libres dans le message TRD, n le nombre de bits alloués au codage de la zone et p le nombre de bits alloués au codage d'une coordonnée. La France est considérée comme un carré de 1000 km de côté.
Sachant qu'une précision de l'ordre de la dizaine de mètre est nécessaire, on a les relations :

$$\begin{cases} q = n + 2p \\ \dfrac{1000 \times 1000}{10 \times 2^p} \leq 2^p \end{cases} \Rightarrow p < q - \frac{51 ln10}{ln2} \ \ et \ \ n = q - 2p > 0$$

Application numérique avec les demi-octets L à T utilisés pour la localisation des bornes.

$q$ = 36 - 2 bits non utilisés = 34
$p$ = 16
$n$ = 2

On a alors quatre zones de 650 km de côtés.

Plus le nombre de zones est important, plus le risque de passer une communication sous une borne proche de son domicile mais hors de sa zone est grand (nécessité dans ce cas là de calculer des distances entre bornes de zones différentes et donc référencées dans des repères différents). En contrepartie, plus le nombre de zones est important, moins le nombre de bits nécessaire au codage des coordonnées est important. Il y a donc un compromis à effectuer.

La saisie des coordonnées des bornes peut être effectuée via une relation homme machine (RHM) de type cartographique. Si le centre CEDP devait être implanté sur station de travail, il serait opportun pour gérer la localisation des bornes d'utiliser des données de terrain numérisées via une interface graphique à définir.

On peut également prévoir :

- l'extension de l'interface cartographique à l'exploitation maintenance (par exemple : association d'une couleur à l'état d'une borne) ;
- dans le cas de plusieurs entités d'exploitation de placer les données cartographiques au niveau de tout les terminaux.

Récapitulatifs des évolutions réseau nécessaires

**Téléchargement des coordonnées des bornes**

- Saisie au niveau centre CEDP des coordonnées des bornes et de la zone adéquate ;
- ajout d'un article dans le message "Transmission des données" (Article 5 : coordonnées borne BFR comprenant la zone de la borne BFR ses coordonnées). La zone maximale interborne, en deçà de laquelle un tarif réduit peut être appliqué, est placée dans une temporisation BFR que la borne doit savoir gérer ;
- saisie au niveau service des abonnés SAB de la nouvelle option d'abonnement appelée "option voisinage" ;
- changements dans l'interface centre CAP-service SAB ;
- dans l'enregistrement de la base des abonnements du centre CAP, ajout de l'option voisinage dans le champ "option d'abonnement" ; utilisation des deux bits de poids forts du champ télépersonnalisation pour coder la télépersonnalisation transparente des coordonnées (un bit pour la demande, un bit pour la certification) ;
- au premier appel avec numéro particulier, la télépersonnalisation transparente des coordonnées de la bome nominale est déclenchée ; selon le numéro traduit, la bome place ses coordonnées dans le message TRD au format adéquat et l'envoie à l'unité URB dans le message "Réponse d'authentification du combiné" ;
- le contrôle du message TRD est effectué au niveau centre CAP sur les demi-octets A...M si I=0, sur les demi-octets A ..K si I=3 et sur les demi-octets A ... T sinon.

**Déroulement d'une communication**

- La borne calcule la distance entre elle-même et la borne nominale de l'abonné. Un drapeau option voisinage (OV) est rajouté dans le ticket de communication. On peut alors avoir trois cas :

  - la zone est différente pour la borne courante et la borne nominale $\Rightarrow$ OV =0,
  - la zone est la même mais d(interbome) > dmax $\Rightarrow$ OV=0,
  - la zone est la même mais d(interbome) < dmax $\Rightarrow$ OV=1 ;

- le nom commercial du service est affiché sur l'écran si $\Rightarrow$ OV = 1, sinon BI-BOP apparaît ;
- une facturation spécifique des tickets "option voisinage" est réalisée au niveau du service SVF.

Deuxième exemple de réalisation

Le second exemple est un exemple de réalisation permettant d'attribuer à un abonné du réseau BiBop (marque déposée) des conditions spécifiques en fonction de la zone d'appel de l'abonné.

**Définition du service**

L'objectif de ce service est de fournir des conditions d'accès au réseau BiBop en fonction des caractéristiques de la zone d'appel (centre commercial, centre d'affaire, etc..).

Un découpage de proximité en cellules de petites taille est offert à tous les abonnés uniquement sur les bornes couvrant la zone définie par l'opérateur.

**Contraintes de réalisation**

La mise en oeuvre et sa gestion tant au niveau de l'exploitation que du système usager doivent être relativement simples.

L'abonné doit être averti, lorsqu'il décroche, du tarif par un message vocal et (ou) un affichage écran, afin, le cas échéant (limite de zone de voisinage), de pouvoir raccrocher avant d'être taxé. Ce service doit être disponible même lorsque le centre CAP n'est pas joignable.

**La réalisation**

La réalisation proposée repose sur une diffusion de données de fonctionnement attribuant à chaque borne (BFR) des conditions d'accès qui lui sont propre.

L'exploitant, au moment de la création d'une borne, saisit au niveau du centre CEDP en plus des caractéristiques habituelles, les conditions d'accès pour les communications passées sous cette borne. Les conditions sont ajoutées aux données de fonctionnement des bornes transmises successivement du centre CEDP aux unités URB, puis des unités URB à leurs bornes respectives de rattachement. L'unité URB envoie à chacune de ses bornes les conditions proposées à l'usager.

La borne BFR, à chaque appel, indique, par un message vocal et (ou) un message écrit les conditions qui sont appliquées pour la communication qui va être passée.

Lorsque la communication se termine, la borne envoie un raccroché BFR en indiquant les conditions utilisées (un nouveau champ). L'unité URB élabore le ticket de communication en fonction des conditions d'accès.

Récapitulatifs des évolutions réseau nécessaires

**Téléchargement des conditions d'accès aux bornes**

- Saisie au niveau centre CEDP des conditions d'accès associées à chaque borne 22 (BFR) ;
- ajout d'articles dans le message "transmission des données de fonctionnement"

  article 6 : Type de tarif
  article 7 : Numéros spéciaux
  etc...

**Déroulement d'une communication**

- La borne envoie au terminal un affichage lui indiquant la particularité de l'appel et (ou) un message vocal ;
- le nom commercial du service et (ou) du commerçant est affiché sur l'écran ;
- une facturation spécifique de ces tickets est réalisée au niveau du service de valorisation et de facturation (SVF).

**GLOSSAIRE**

CT2 :      "Second Generation Cordless Telephone" (I-ETS 300 131)
CAI :      "Common Air Interface"

**EP 0 784 908 B1**

OTAR : "Over the Air Registration"
URB : Unité de Raccordement de Bornes
BFR : Borne Fixe Radio
CEDP : Centre d'Exploitation Décentralisé Pointel
CEPP : Centre d'Exploitation Principal Pointel
CAP : Centre d'Authentification Pointel
SAB : Service des Abonnés BiBop
SVF : Service de Valorisaiton et de Facturation
BiBop : Nom commercial du service "Télépoint" de France Télécom en France
RHM : Relations Homme Machine

## Revendications

**1.** Procédé de communication dans un réseau de télécommunications entre une borne (22) et au moins un terminal (11) distant de celle-ci, dans lequel on permet à un abonné (20) à ce réseau équipé d'un terminal (11), ou d'un module d'identification lorsque ce terminal est un terminal multi-usagers, de choisir au moins une zone d'accès (21) au réseau, dans laquelle il bénéficie de conditions particulières, caractérisé en ce que ledit procédé comprend les étapes suivantes :

- lors de la constitution du réseau, téléchargement des coordonnées des bornes (22) par un organe centralisé (CEDP),
- depuis la zone d'accès au réseau choisie par l'abonné, téléchargement dans le terminal (11), ou le module d'identification, des coordonnées cartographiques permettant d'associer à l'abonné cette zone d'accès au réseau où il bénéficiera de conditions particulières,
- lors d'un accès au réseau, détermination par la borne correspondante (22) si les conditions particulières s'appliquent à cet accès, en comparant ses propres coordonnées cartographiques à celles stockées et transmises par le terminal.

**2.** Procédé selon la revendication 1, caractérisé en ce que le réseau de télécommunication est un réseau accessible par voie radioélectrique comportant des bornes d'accès (22), une borne étant associée avec un terminal au moment d'une communication.

**3.** Procédé selon l'une quelconque des revendications 1 ou 2, caractérisé en ce que les différentes zones d'accès (23) sont répertoriées sur une cartographie, en attribuant à chaque borne d'accès (22), ou à chaque terminal multi-usagers, des coordonnées élémentaires, et/ou des caractéristiques personnalisées.

**4.** Procédé selon la revendication 2, caractérisé en ce que chaque borne d'accès au réseau discrimine localement, par abonné à ce réseau et sur la base d'informations caractéristiques ou de données cartographiques, les appels locaux émis ou reçus par cet abonné des appels non locaux afin d'appliquer des conditions d'accès ou de tarification différenciées.

**5.** Procédé selon la revendication 1, caractérisé en ce que le réseau de télécommunications est un réseau de terminaux multi-usagers comportant chacun un accès physique à un module d'identification d'abonné au réseau.

**6.** Procédé selon la revendication 5, caractérisé en ce que chaque terminal multi-usagers discrimine localement, par abonné à ce réseau et sur la base d'informations caractéristiques, les appels locaux émis ou reçus par cet abonné des appels non locaux afin d'appliquer des conditions d'accès ou de tarification différenciées.

**7.** Procédé selon la revendication 5, caractérisé en ce que chaque terminal multi-usagers discrimine, par abonné à ce réseau et sur la base de données cartographiques, les appels locaux émis ou reçus par cet abonné des appels non locaux afin d'appliquer des conditions d'accès ou de tarification différenciées.

**8.** Procédé selon l'une quelconque des revendications 1 à 4, caractérisé en ce que les terminaux sont des terminaux mobiles.

**9.** Procédé selon l'une quelconque des revendications 1 à 7, caractérisé en ce que le module d'identification est une carte à mémoire.

9

**EP 0 784 908 B1**

**Patentansprüche**

1. Verbindungsverfahren in einem Telekommunikationsnetz zwischen einer Anschlußstation (22) und mindestens einem von dieser entfernt angeordneten Endgerät (11), wobei einem mit einem Endgerät (11) oder mit einem Identifizierungsmodul, wenn dieses Endgerät ein Mehrfachnutzer-Endgerät ist, ausgerüsteten Teilnehmer (20) dieses Netzes gestattet wird, mindestens eine Netzzugangszone (21) zu wählen, in der er Sonderbedingungen genießt, dadurch gekennzeichnet, daß das Verfahren die folgenden Schritte umfaßt:

   - während des Netzaufbaus Fernladung der Koordinaten der Anschlußstationen (22) durch ein Zentralorgan (CEDP),
   - nach dem Wählen der Netzzugangszone durch den Teilnehmer Fernladung der kartographischen Koordinaten, welche es ermöglichen, dem Teilnehmer diese Zugangszone zum Netz zuzuordnen, wo er Sonderbedingungen genießt, in das Endgerät (11) oder das Identifizierungsmodul,
   - während eines Netzzugangs Bestimmung durch die entsprechende Anschlußstation (22), ob die Sonderbedingungen für diesen Zugang anwendbar sind, wobei sie ihre eigenen kartographischen Koordinaten mit den durch das Endgerät gespeicherten und übertragenen vergleicht.

2. Verfahren nach Anspruch 1, dadurch gekennzeichnet, daß das Telekommunikationsnetz ein auf funkelektrischem Weg zugängliches Netz mit Zugangs-Anschlußstationen (22) ist, wobei zum Zeitpunkt einer Verbindung eine Anschlußstation mit einem Endgerät verbunden ist.

3. Verfahren nach einem der Ansprüche 1 oder 2, dadurch gekennzeichnet, daß die unterschiedlichen Zugangszonen (23) in einer Kartensammlung registriert sind, wobei jeder Zugangs-Anschlußstation (22) oder jedem Mehrfachnutzer-Endgerät Elementarkoordinaten und/oder persönliche Merkmale zugeordnet sind.

4. Verfahren nach Anspruch 2, dadurch gekennzeichnet, daß jede Netzzugangs-Anschlußstation lokal für einen Teilnehmer an diesem Netz und auf der Grundlage kennzeichnender Informationen oder kartographischer Daten die von diesem Teilnehmer abgehenden oder empfangenen örtlichen Anrufe von den außerörtlichen Anrufen unterscheidet, um unterschiedliche Bedingungen für den Zugang oder für die Gebührenfestsetzung anzuwenden.

5. Verfahren nach Anspruch 1, dadurch gekennzeichnet, daß das Telekommunikationsnetz ein Netz von Mehrfachnutzer-Endgeräten ist, von denen jedes einen physischen Zugang für ein Netzteilnehmer-Identifizierungsmodul umfaßt.

6. Verfahren nach Anspruch 5, dadurch gekennzeichnet, daß jedes Mehrfachnutzer-Endgerät lokal für einen Teilnehmer an diesem Netz und auf der Grundlage kennzeichnender Informationen die von diesem Teilnehmer abgehenden oder empfangenen örtlichen Anrufe von den außerörtlichen Anrufen unterscheidet, um unterschiedliche Bedingungen für den Zugang oder die Gebührenfestsetzung anzuwenden.

7. Verfahren nach Anspruch 5, dadurch gekennzeichnet, daß jedes Mehrfachnutzer-Endgerät für einen Teilnehmer an diesem Netz und auf der Grundlage kartographischer Daten die von diesem Teilnehmer abgehenden oder empfangenen örtlichen Anrufe von den außerörtlichen Anrufen unterscheidet, um unterschiedliche Bedingungen für den Zugang oder die Gebührenfestsetzung anzuwenden.

8. Verfahren nach einem der Ansprüche 1 bis 4, dadurch gekennzeichnet, daß die Endgeräte mobile Endgeräte sind.

9. Verfahren nach einem der Ansprüche 1 bis 7, dadurch gekennzeichnet, daß das Identifizierungsmodul eine Speicherkarte ist.

**Claims**

1. Communication process in a telecommunications network between a base station (22) and at least one terminal (11) remote therefrom, in which a subscriber (20) to said network equipped with a terminal (11) or an identification module when said terminal is a multi-user terminal, to choose at least one access area (21) to the network where he benefits from special conditions, characterized in that said process comprises the following stages:

   - during the design of the network remote loading of the coordinates of the base stations (22) by a centralized member (CEDP),

- from the access area to the network chosen by the subscriber, remote loading into the terminal (11) or identification module of cartographic coordinates permitting the association with the subscriber of said access area to the network where he will benefit from special conditions,

- during an access to the network, determination by the corresponding base station (22) whether special conditions apply to said access, by comparing its own cartographic coordinates with those stored and transmitted by the terminal.

2. Process according to claim 1, characterized in that the telecommunications network is a radio-accessible network having access base stations (22), a base station being associated with a terminal at the time of a call.

3. Process according to either of the claims 1 and 2, characterized in that the different access areas (23) are listed on a map, allocating to each access base station (22) or each multi-user terminal, elementary coordinates and/or personalized characteristics.

4. Process according to claim 2, characterized in that each access base station to the network locally discriminates, by subscriber to said network and on the basis of characteristic informations or cartographic data, the local calls made or received by said subscriber, from non-local calls in order to apply access conditions or differentiated pricing.

5. Process according to claim 1, characterized in that the telecommunications network is a network of multi-user terminals, each having a physical access to a network subscriber identification module.

6. Process according to claim 5, characterized in that each multi-user terminal locally discriminates, by subscriber to said network and on the basis of characteristic informations, the local calls made or received by said subscriber, from non-local calls in order to apply access conditions or differentiated pricing.

7. Process according to claim 5, characterized in that each multi-user terminal discriminates, by subscriber to said network and on the basis of cartographic data, the local calls made or received by said subscriber, from non-local calls in order to apply access conditions or differentiated pricing.

8. Process according to any one of the claims 1 to 4, characterized in that the terminals are mobile terminals.

9. Process according to any one of the claims 1 to 7, characterized in that the identification module is a memory or chip card.

FIG. 1

FIG. 2